# EUROPEAN PATENT SPECIFICATION

(11) **EP 2 649 885 B1**
(45) Date of publication and mention of the grant of the patent: **14.03.2018**
(21) Application number: 13163107.9
(22) Date of filing: 10.04.2013
(51) Int. Cl.: A23D 7/00, A23D 7/02, A23D 7/005

(54) **Pourable, fat-comprising food composition comprising milk fat fractions**
Gießbare, fetthaltige Lebensmittelzusammensetzung mit Milchfettfraktionen
Compositions de matières grasses coulables comprenant des fractions de la grasse du lait

(30) Priority: 10.04.2012 EP 12163616
(43) Date of publication of application: 16.10.2013
(73) Proprietor: FrieslandCampina Nederland B.V., 3818 LE Amersfoort (NL)
(72) Inventor: van Iersel, Jan Pieter Hubert, 3818 LE Amersfoort (NL)
(74) Representative: V.O.

(56) References cited:
- EP-A1- 0 095 001
- EP-A2- 1 106 071
- WO-A1-02/49444
- WO-A1-03/092394
- WO-A1-2009/056493
- JP-A- 2007 151 459
- US-A- 4 148 930
- US-A- 4 961 951
- US-B1- 6 517 884
- DEFFENSE E: "MILK FAT FRACTIONATION TODAY: A REVIEW1", JOURNAL OF THE AMERICAN OIL CHEMISTS' SOCIETY, SPRINGER, BERLIN, DE, vol. 70, no. 12, December 1993 (1993-12), pages 1193-1201, XP000416952, ISSN: 0003-021X, DOI: 10.1007/BF02564225
- SCOTT L L ET AL: "Physical Properties of Cream Reformulated with Fractionated Milk Fat and Milk-Derived Components", JOURNAL OF DAIRY SCIENCE, AMERICAN DAIRY SCIENCE ASSOCIATION, US, vol. 86, no. 11, November 2003 (2003-11), pages 3395-3404, XP026982826, ISSN: 0022-0302 [retrieved on 2003-11-01]
- AKEN VAN G A ET AL: "COMPOSITION AND CRYSTALLIZATION OF MILK FAT FRACTIONS", JOURNAL OF THE AMERICAN OIL CHEMISTS' SOCIETY (JA, SPRINGER, DE, vol. 76, no. 11, 1 November 1999 (1999-11-01), pages 1323-1331, XP008058846, ISSN: 0003-021X, DOI: 10.1007/S11746-999-0146-8
- J. Barlowska ET AL: "Nutritional Value and Technological Suitability of Milk from Various Animal Species Used for Dairy Production", COMPREHENSIVE REVIEWS IN FOOD SCIENCE AND FOOD SAFETY, vol. 10, no. 6, 25 October 2011 (2011-10-25), pages 291-302, XP055391365, US ISSN: 1541-4337, DOI: 10.1111/j.1541-4337.2011.00163.x

## Description

### Field of the invention

The invention relates to fat-comprising food compositions and, in particular, to pourable, fat-comprising food compositions suitable for frying and/or baking. The invention further relates to a method to produce these pourable food compositions and to the use thereof in frying and baking of foodstuffs.

### Background of the invention

Liquid food compositions are widely used in cooking for frying or baking and are preferred over solid or semisolid products because they are easy to handle and mix with other ingredients. Liquid shortenings consist mainly of triglycerides, are most often of vegetable origin and are generally water-in-oil emulsions.

An example of a liquid margarine is described in US 7,186,434. The product is a pourable water-in-oil emulsion comprising 70-90 wt.% of a fat phase comprising 1-10 wt.% of hard stock fat, of which at least 50 wt.% of its fatty acid residues are derived from plant wax. Another example is a food composition for shallow frying described in WO 02/49444. This composition comprises triglycerides, of which at least 60 wt.% of vegetable origin, and 0.05-3 wt.% sunflower lecithin.

These frying compositions are liquid due to the vegetable fats present, which have a low melting point. However, vegetable fats do not always have a desired taste. Moreover its taste can be very distinctive and even bitter and interfere with the taste of a food to be cooked. On the other hand, vegetable oils can also have a very bland taste. In that case, flavour ingredients have to be added, which results in extra ingredients in the ingredient declaration. At the same time, many consumers use butter for baking and frying and appreciate the traditional butter taste for its unique pleasing flavour not found in other fats. There is therefore a need for shortening products that are liquid and at the same time have advantageous butter sensory properties, such as butter taste and flavour.

However, blending even small amounts of butter with vegetable fats leads to a drastic increase of the melting temperature of the total blend. As a consequence, butter melanges with vegetable fats are solid at room temperature, let alone at refrigerator temperatures. These are often used as bread spreads or butter substitutes and are not pourable. A pourable butter melange, Beur Culinair is known, which comprises butter oil and vegetable oils. Although the product is pourable at room temperature the product is solid at refrigerator temperature.

WO 03/092394 describes a food product for shallow frying which may be pourable and comprises 35-90 wt.% fat phase, an aqueous phase, lecithin as emulsifier, thickener and 1.5-5 wt.% hardstock fat with a melting point of about 58°C. This composition may comprise 0.5-2 % butter milk powder or skim milk powder.

US 4,961,951 describes the preparation of a blend of vegetable oil and whole butter, which is pourable at refrigerator temperatures.

US6517884 discloses w/o emulsions which are pourable at 5°C and which are suitable for shallow frying comprising an unspecified amount of low melting butterfat fractions. The aqueous phase does not comprise cream serum and/or buttermilk. It is an aim of the present invention to provide a fat-comprising food composition, which has a distinguished butter taste and is pourable at refrigerator temperatures.

### Summary of the invention

The present invention relates, in a first aspect, to a method for the preparation of a pourable, fat-comprising food composition, said method comprising the steps of:
(i) preparing an aqueous phase, comprising cream serum or butter milk
(ii) preparing a fat phase, wherein the fat phase comprises at least 10 wt.% milk fat fractions having a melting point below 30°C based on the weight of the fat phase, wherein the fat phase comprises 0-90 wt.% of a vegetable oil having a melting point lower than 0°C based on the weight of the fat phase, and optionally a hard fat component in an amount of 0.1-5 wt.% based on the weight of the fat phase, and
(iii) combining the aqueous and the fat phase to obtain a water-in-oil emulsion having 30-90 wt.% of a fat phase and 10-70 wt.% of a water phase, and having a pourable consistency at refrigerator temperatures and, in particular, at 4°C. The food product prepared is a pourable food composition suitable for frying comprising 30-90 wt.% of a fat phase and 10-70 wt.% of a water phase, comprising at least 10 wt.% milk fat fractions having a melting point below 30°C based on the weight of the fat phase, wherein the aqueous phase comprises cream serum or butter milk, wherein the fat phase comprises 0-90 wt.% of a vegetable oil having a melting point lower than 0°C based on the weight of the fat phase, and optionally a hard fat component in an amount of 0.1-5 wt.% based on the weight of the fat phase, wherein the composition is a water-in-oil emulsion, wherein the composition has a pourable consistency at refrigerator temperatures and, in particular, at 4°C.

The present invention further relates to a method of preparing a food product, wherein the method according to the invention is carried out and the pourable food composition obtained is used to prepare a food product. The present invention also relates to a method of preparing a food product, wherein the method according to the invention is carried out and the pourable food composition obtained is used to prepare a food product by shallow frying or baking of foodstuffs.

### Brief description of the drawings

Figure 1: Shear stress vs shear rate of 82% fat pourable food compositions.
Figure 2: Viscosity vs shear rate of 82% fat pourable food compositions.
Figure 3: shows the weight content of milk fat fractions (maximum wt.% of the weight of the fat phase) as a function of the main melting point (°C) of the milk fat fraction as measured by DSC. The area below the line connecting the points corresponds to compositions that are pourable at 4°C.

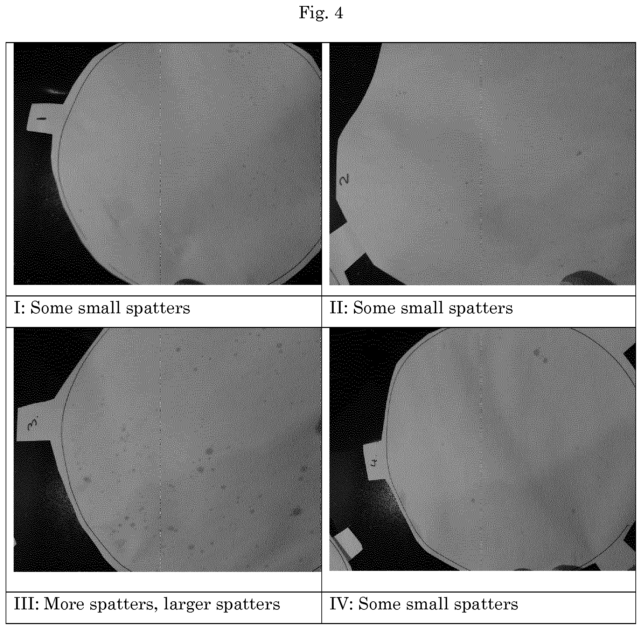

Figure 4: spattering behaviour of a pourable food composition; comparison between proteins in the water phase.

### Detailed description of the invention

As said, the present invention relates to a method for the preparation of a pourable, fat-comprising composition that comprises milk fat fractions according to claims 1-6. Pourable in the context of the present invention means a composition that has a fluid consistency, rather than solid or spoonable. Pourable compositions flow out of a container wherein these are contained, optionally by squeezing the container. Preferably a pourable composition flows out of a container without having to squeeze the container. The compositions prepared according to the invention have a pourable consistency at refrigerator temperatures and, in particular, the compositions are pourable at 4°C. Pourability may be expressed in shear stress and/or viscosity. In a suitable embodiment of the pourable composition prepared according to the present invention and/or embodiments thereof, the shear stress of the pourable composition at a shear rate of 50/s is less than 109 Pa, more suitable the shear stress is less than 100 Pa, more suitable less than 90 Pa, even more suitable less than 65 Pa and most suitable less than 58 Pa. In a preferred embodiment of the pourable composition prepared according to the present invention and/or embodiments thereof the shear stress at 50/s is at least 40 Pa, more preferably at least 45 Pa and most preferably at least 55 Pa.

In another preferred embodiment of the pourable composition prepared according to the present invention and/or embodiments thereof the shear stress of the pourable composition at a shear rate of 30/s is less than 82 Pa, more preferable less than 80 Pa, more preferable less than 65 Pa, more preferable less than 45 Pa, and most preferable less than 41 Pa. In a preferred embodiment of the pourable composition prepared according to the present invention and/or embodiments thereof the shear stress at a shear rate of 30/s is at least 30 Pa, more preferably at least 35 Pa and most preferably at least 38 Pa.

In another preferred embodiment of the pourable composition prepared according to the present invention and/or embodiments thereof the shear stress of the pourable composition at a shear rate of 20/s is less than 71 Pa, more preferable less than 65 Pa, more preferable less than 56 Pa, more preferable less than 38 Pa, and most preferable less than 34 Pa. In a preferred embodiment of the pourable composition prepared according to the present invention and/or embodiments thereof the shear stress at a shear rate of 20/s is at least 20 Pa, more preferably at least 25 Pa and most preferably at least 30 Pa.

In another preferred embodiment of the pourable composition prepared according to the present invention and/or embodiments thereof the shear stress of the pourable composition at a shear rate of 10/s is less than 62 Pa, more preferable less than 54 Pa, more preferable less than 46 Pa, more preferable less than 30 Pa, and most preferable less than 27 Pa. In a preferred embodiment of the pourable composition prepared according to the present invention and/or embodiments thereof the shear stress at a shear rate of 10/s is at least 12 Pa, more preferably at least 17 Pa and most preferably at least 22 Pa.

Suitably, the pourability of the pourable composition prepared according to the present invention and embodiments thereof may be expressed as viscosity.

In another preferred embodiment of the pourable composition prepared according to the present invention and/or embodiments thereof the viscosity of the pourable composition at a shear rate of 10/s is less than 6.2 Pa.s, more preferable less than 5.2 Pa.s, more preferable less than 4.7 Pa.s, more preferable less than 3 Pa.s, and most preferable less than 2.7 Pa.s. In a preferred embodiment of the pourable composition prepared according to the present invention and/or embodiments thereof the viscosity at a shear rate of 10/s is at least 1.7 Pa.s, more preferably at least 2 Pa.s and most preferably at least 2.5 Pa.s.

In another preferred embodiment of the pourable composition prepared according to the present invention and/or embodiments thereof the viscosity of the pourable composition at a shear rate of 3/s is less than 12.5 Pa.s, more preferable less than 12 Pa.s, more preferable less than 11.5 Pa.s, more preferable less than 7 Pa.s, and most preferable less than 6 Pa.s. In a preferred embodiment of the pourable composition prepared according to the present invention and/or embodiments thereof the viscosity at a shear rate of 3/s is at least 3.5 Pa.s, more preferably at least 4 Pa.s and most preferably at least 4.5 Pa.s.

In another preferred embodiment of the pourable composition prepared according to the present invention and/or embodiments thereof the viscosity of the pourable composition at a shear rate of 20/s is less than 3.6 Pa.s, more preferable less than 3.2 Pa.s, more preferable less than 3 Pa.s, more preferable less than 2 Pa.s, and most preferable less than 1.8 Pa.s. In a preferred embodiment of the pourable composition prepared according to of the present invention and/or embodiments thereof the viscosity at a shear rate of 20/s is at least 1 Pa.s, more preferably at least 1.3 Pa.s and most preferably at least 1.6 Pa.s.

The pourable food composition prepared according to the present invention comprises fat. The fat of the pourable food composition comprises at least 10 wt.% milk fat fraction. One of the goals of the present invention is to provide a food composition with a taste and flavour like butter but that is still pourable at refrigerator temperature. It was found that when using milk fat fractions a pourable composition was obtained that comprises at least 10 wt.% of milk fat on total fat.

The fat phase of the pourable food composition prepared according to the present invention and/or embodiments thereof comprises milk fat fractions and, in particular, it comprises more than 10 wt.% milk fat fractions based on the weight of the fat phase. Preferably, the pourable composition prepared according to the present invention and/or embodiments thereof comprises at least 20 wt.%, more preferably at least 30 wt.% milk fat fractions based on the weight of the fat phase. Yet more preferably, the pourable composition prepared according to the invention and/or embodiments thereof comprises more than 35 wt.% milk fat fractions thereof based on the weight of the fat phase. In a particularly preferred embodiment, the pourable composition prepared according to the present invention and/or embodiments thereof comprises at least 40 wt.% milk fat fractions based on the weight of the fat phase. In other preferred embodiments, the compositions prepared according to the present invention and/or embodiments thereof comprises at least 50 wt.%, preferably at least 60 wt.% and yet more preferably at least 70 wt.% milk fat or fractions thereof based on the weight of the fat phase.

Under milk fat it is understood a fat mixture originating from milk, which is generally a mixture of triglycerides of a large variety of fatty acids. In the context of the invention the terms "oil" and "fat" are used interchangeably. Any suitable source of milk fat may be used, such as cream, butter or anhydrous milk fat. Milk fat fractions may be obtained by fat fractionation techniques known to a person skilled in the art, for example, by fractionation based on crystallisation. However, other fat fractionation techniques such as supercritical CO₂ extraction, fractionation with solvent, short-path distillation and dry fractionation, vacuum filtration, centrifugation and the use of a membrane press are also suitable. Most preferred are fractionation techniques that do not involve the use of solvents, and particularly do not involve organic solvents and or surface active agents. Preferred fractionation techniques may be selected from the group comprising, supercritical CO₂ extraction, short path distillation, dry fractionation, vacuum filtration, centrifugation and the use of a membrane press. Milk fat fractions in the present invention may be obtained by single or multi-step fractionation of milk fat. Preferably, anhydrous milk fat is used to obtain the milk fat fractions.

Fractionation by crystallisation is based on partial crystallisation of triglycerides with a high melting point brought about by controlled slow cooling under mild stirring and then on their separation from the remaining liquid fats by filtration or centrifugation. The solid phase formed by the crystals is called stearin fraction and the remaining liquid phase is called the olein fraction. The operation may be repeated in multiple ways on oleins and/or stearins obtained by new melting and cooling at different temperatures.

These successive operations performed on the fat fractions obtained in the previous steps are called multi-step fractionations. For example from a first olein fraction a second olein and stearin fraction are obtained, being denoted as olein-olein (OO) or olein-stearin (OS) respectively. These multi-step fractions may again be fractioned. For example the OS fraction is further fractionated into a olein fraction (OSO) and a stearin fraction (OSS). In general the order of fractionating is indicated, e.g. SO is the olein fraction of a stearin fraction. Typical main melting points of three olein fractions as measured by DSC are given in Table 1 below.

**Table 1**

| Olein fractions | Main melting peak | |
|---|---|---|
| | region, °C | typical value, °C |
| First olein (O) | 15-20 | 17 |
| Second olein (OO) | 10-15 | 11 |
| Third olein (OOO) | 5-10 | 7 |

It is to be understood that these ranges of melting points are indicative and may fall outside the ranges indicated. A skilled person will known how to use milk fat fractions based on the teaching of the present invention and its embodiments. Under the melting point of a milk fat fraction it is understood the main melting peak as determined by DSC. DSC is a thermo analytical technique in which the difference in the amount of heat required to increase the temperature of a sample and reference is measured as a function of temperature. Both the sample and reference are maintained at nearly the same temperature throughout the experiment. Generally, the temperature program for a DSC analysis is designed such that the sample holder temperature increases linearly as a function of time. A suitable DSC melting scheme is as follows:
Melt samples for 30 minutes at 65°C, then 1 minute at 25°C, from 25°C to 65°C at a rate of 30°C per minute; 5 minutes at 65°C; from 65°C to 0°C at a rate of 40°C/min; 60 minutes at 0°C; from 0°C to 40°C at a rate of 20°C/min; 60 minutes at 40°C ; from 40.°C to 65°C at a rate of 5.00°C/min.

In the present invention, particularly low melting milk fat fractions, such as olein fractions, may advantageously be used to obtain the pourable product prepared according to the invention and/or embodiments thereof. For the purpose of the present invention, low melting milk fat fractions are milk fat fractions with a lower melting point than non-fractionated butter fat or anhydrous milk fat (AMF). In a preferred embodiment these milk fat fractions of the invention and/or embodiments thereof, preferably have a melting point as measured by DSC lower than 30°C, preferably lower than 20°C, more preferably lower than 15°C and yet more preferably lower than 12°C, even more preferably lower than 10°C, more preferably lower than 7°C, and most preferably lower than 5°C. Under the melting point of a milk fat fraction it is understood the main melting peak as determined by DSC. The olein fractions are characterised by a strong butter taste and therefore are particularly suitable to prepare products with butter taste. In a preferred embodiment, olein fractions higher than the first olein, such as second olein or a further stearin fraction are used. More preferably, the composition comprises the second and/or third olein fractions.

In a preferred embodiment, the composition prepared according to the invention, comprises 10-90 wt.% milk fat or fractions thereof based on the weight of the fat phase. More preferably, the composition comprises 10-70 wt.% and most preferably 10-60 wt.% milk fat or fractions thereof based on the weight of the fat phase. The composition may also comprise 10-40 wt.% or 10-30 wt.% milk fat or fractions thereof based on the weight of the fat phase. In yet another preferred embodiment of the invention and/or embodiments thereof, the milk fat or milk fat fractions content is higher than 15wt.% and preferably higher than 20 wt.%, more preferably higher than 25 wt.% and even more preferably higher than 30 wt.% based on the weight of the fat phase. Examples of such preferred compositions are 20-80 wt.%, and 30-70 wt.%.

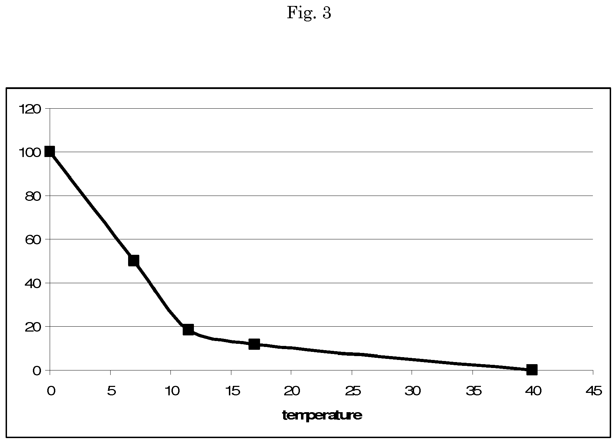

It is to be understood that the amount of a milk fat fraction present in the composition depends on the melting point of the fraction and on the total amount of fats present in the composition, in order to obtain a product that is pourable at refrigerator temperatures. Low melting fat fractions may be incorporated in a higher amount than high melting fat fractions. This relationship may be suitably demonstrated using a graph in Figure 3 for a composition comprising 82 wt.% fat phase, which comprises milk fat fractions, sunflower oil and fully hydrogenated rape seed oil in an amount of 0.5 wt.% on total product. Figure 3 shows on the horizontal axis the main melting point (°C) of a milk fat fraction as measured by DSC and on the vertical axis the content of the milk fat fraction in % w/w of the fat phase. The line connecting the experimental values determines an area under this line, wherein the compositions are pourable at refrigerator temperatures.

Based on Figure 3, Table 2 shows approximate values for the weight content of three exemplary milk fat fractions in the fat phase, together with their melting points, which results in a pourable composition.

**Table 2**

| Main melting point, °C | % milk fat |
|---|---|
| 5-10 | 0-60 |
| 10-15 | 0-40 |
| 15-20 | 0-30 |

As explained above, the amount of milk fat or a milk fat fraction used is dependent on the main melting point thereof. As an example, a milk fat fraction with a main melting point in the range 15 to 20°C, is preferably present in an amount 10-30 wt.%, more preferably 15-25 wt.% and most preferably 18-22 wt.% based on the weight of the fat phase. When a milk fat fraction is used, which has a main melting point in the range 10 to 15°C, it is preferably present in an amount 10-40 wt.%, more preferably 15-30 wt.%, even more preferably 20-23 wt.% based on the weight of the fat phase. When a milk fat fraction is used having a main point in the range of 5-10°C, it is preferably present in an amount from 10 to 60 wt.%, more preferably, from 20 to 50 wt.%, 25 to 45 wt.% and most preferably 30 to 40 wt.% based on the weight of the fat phase. Also a milk fat fraction may be used having a main melting point below 5°C, such as a fourth olein fraction. This fraction is preferably present in an amount 10-100 wt.%, more preferably 20-80 wt.%, more preferably 25-70 wt.%, more preferably 30 to 60 wt.%, more preferably 40-50 wt.% and most preferably 42-47 wt.% based on the weight of the fat phase. It is to be understood that also mixtures of different milk fat fractions may be used.

The compositions prepared according to the invention may also comprise other fats such as vegetable oils. These fats have a melting point lower than 0°C. Vegetable oils comprising unsaturated fatty acid residues are preferred such as sunflower oil, soybean oil, rapeseed oil, cottonseed oil, olive oil, corn oil, groundnut oil, maize oil, linseed oil, linola oil, coconut oil, palm oil and/or mixtures thereof. These oils may be partially hydrogenated. Also fractions of these oils are suitable. More preferably, the vegetable oil is sunflower oil, rapeseed oil, olive oil and/or soybean oil. Preferably, the composition comprises 0-90 wt.% vegetable oils, more preferably 10-80 wt.%, more preferably 20 to 70 wt.%, even more preferably 30 to 60 wt.%, yet even more preferably 40 to 50 wt.% based on the weight of the fat phase. Yet more preferably, the composition comprises 10-60 wt.% vegetable oils, more preferably 25-55 wt.%, more preferably 35-45 wt.% based on the weight of the fat phase. In a preferred embodiment, the composition comprises sunflower oil, olive oil and/or rapeseed oil, in an amount 15-50 wt.% based on the weight of the fat phase.

The fat phase may also comprise a hard fat component. The hard fat component may contribute to desired structure and melt behaviour of the composition, particularly at ambient temperatures. This component preferably has a melting point above 55°C and more preferably in the range from 55 to 70°C. The hard fat may be selected from vegetable oils such as hardened rapeseed oil, hardened soybean oil, hardened cottonseed oil, hardened corn oil, hardened palm oil, hardened palm oil fractions. These oils are optionally partly or fully hydrogenated to obtain desired structuring properties. Preferably, the hard fat is a fully refined and fully hydrogenated vegetable fat. Also high melting fractions of milk fat, such as a first stearin and second stearin fractions may be used as a hard fat component. The hard fat is optionally present in an amount of 0.1-5 wt.%, and more preferably 0.5-1.5 wt.% based on the weight of the fat phase.

The food composition prepared according to the present invention and/or embodiments thereof is a water-in-oil emulsion comprising an aqueous phase and a fat phase. The composition comprises 30-90 wt.% fat phase and 10-70 wt.% aqueous phase, wherein the aqueous phase comprises cream serum or buttermilk. More preferably, the composition comprises 50-90 wt.% fat phase. The water phase is preferably 10-50 wt.% of the composition, more preferably 10-30 wt.%, more preferably from 15-25 wt.%. In a preferred embodiment of the invention and embodiments thereof, the composition prepared according to the present invention comprises 60-90 wt.% fat phase and 10-40 wt.% aqueous phase, wherein the aqueous phase comprises cream serum or butter milk. In an alternative embodiment, the composition comprises 15-25 wt.% aqueous phase and 85-75 wt.% fat phase.

The composition may further comprise components common in cooking products and especially common in frying and baking products. For example, the fat phase may comprise colorants such as carotene, fat soluble flavours and vitamins, mono- and/or diglycerides, lecithin, emulsifiers *etc.* The aqueous phase may comprise proteins, particularly the proteins originating from milk or milk fractions, water soluble flavours and vitamins, emulsifiers, thickeners, salt, dairy ingredients, preservatives, *etc.* Examples of these components are whey, rennet permeate, lactic acid, fermented whey and milk or cream serum. In the preparation method according to the invention the water phase comprises butter milk or cream serum. In the process of making butter, a water phase is separated from the milk fat. This water phase separated from butter or cream is respectively called butter milk and milk serum or cream serum. The butter milk or cream serum may be suitable as the water phase or part of the water phase in the pourable food composition prepared according to the present invention. The butter milk and/or cream serum may be added as liquid or as powder. Suitably the amount of protein of the composition of the present invention and/or embodiments thereof ranges from 0.05 to 2.5 wt.% on total composition, more preferably from 0.1 to 2 wt.%, more preferably from 0.2 to 1.5 wt.%, more preferably from 0.3 to 1.2 wt.%, more preferably from 0.4 to 1 wt.%, more preferably from 0.5 to 0.8 wt.% and most preferably from 0.6 to 0.7 wt.% on total product. In a preferred embodiment, the amount of protein in the water phase is from 0.1 to 25 wt.% on the water phase, preferably from 0.25 to 20 wt.% on the water phase, more preferably from 0.5 to 15 wt.% on the water phase, more preferably from 0.75 to 12 wt.%, more preferably from 1 to 10 wt.%, more preferably from 1.25 to 8 wt.%, more preferably, from 1.5 to 5 wt.% on the water phase. In a preferred embodiment, at least 50% of the protein in the water phase comes from butter milk and/or cream serum, more preferably at least 60% of the protein in the water phase comes from butter milk and/or cream serum, more preferably at least 70% of the protein in the water phase comes from butter milk and/or cream serum, more preferably at least 75% of the protein in the water phase comes from butter milk and/or cream serum, more preferably at least 80% of the protein in the water phase comes from butter milk and/or cream serum, more preferably at least 85% of the protein in the water phase comes from butter milk and/or cream serum, more preferably at least 90% of the protein in the water phase comes from butter milk and/or cream serum, more preferably at least 95% of the protein in the water phase comes from butter milk and/or cream serum, and most preferably 100% of the protein in the water phase comes from butter milk and/or cream serum. It was surprisingly found that buttermilk or cream serum improves the spattering behaviour of the pourable composition prepared according to the present invention. This in contrast to a pourable composition with skimmed milk protein.

Preferably, the composition comprises milk serum that is used for flavour and browning behaviours during baking or frying. It is also preferred to use emulsifier such as distilled monoglycerides (DMG) and lecithin to obtain a stable emulsion and decrease spattering during frying. The food composition may also comprise other antispattering agents.

The preparation of a suitable aqueous phase and a fat phase and combining these two to obtain a water-in-oil emulsion are conventional steps in dairy processing industry and are known to a skilled person. In order to obtain a composition with at least 10 wt.% milk fat or fractions thereof, the fat phase should comprise at least 10 wt.% milk fat or fractions thereof.

In a preferred embodiment, the fat phase is prepared from butter obtained from cow's milk. Preferably, the milk fat present in butter is separated to obtain butterfat or also called anhydrous milk fat. The butterfat thus obtained may be subjected to fat fractionation to obtain preferably low melting milk fat fractions. A fat phase is then prepared comprising milk fat fractions, optionally in combination with other fats such as vegetable fats and hard fats as described above.

In a preferred method of the present invention according to claims 1-6 and/or embodiments thereof, the water phase may comprise milk serum or whey, or fermented whey, or other aqueous dairy streams common in milk processing. The use of aqueous dairy streams may contribute to the distinguished butter taste of the product. Both during the preparation of butter from cream or the separation of butterfat from butter a water phase is obtained. This water phase separated from butter or cream, respectively called butter milk and milk cream or cream serum, is used as the water phase or part of the water phase in the pourable food composition prepared according to the present invention. It is to be understood that the butter milk or cream serum may be added as liquid or as powder. Suitably the amount of protein of the composition of the present invention and/or embodiments thereof ranges from 0.05 to 2.5 wt.% on total composition, more preferably from 0.1 to 2 wt.%, more preferably from 0.2 to 1.5 wt.%, more preferably from 0.3 to 1.2 wt.%, more preferably from 0.4 to 1 wt.%, more preferably from 0.5 to 0.8 wt.% and most preferably from 0.6 to 0.7 wt.% on total product. In a preferred embodiment, the amount of protein in the water phase is from 0.1 to 25wt.% on the water phase, preferably from 0.25 to 20wt.% on the water phase, more preferably from 0.5 to 15 wt.% on the water phase, more preferably from 0.75 to 12 wt.%, more preferably from 1 to 10 wt.%, more preferably from 1.25 to 8 wt.%, more preferably, from 1.5 to 5 wt.% on the water phase. In a preferred embodiment, at least 50% of the protein in the water phase comes from butter milk and/or cream serum, more preferably at least 60% of the protein in the water phase comes from butter milk and/or cream serum, more preferably at least 70% of the protein in the water phase comes from butter milk and/or cream serum, more preferably at least 75% of the protein in the water phase comes from butter milk and/or cream serum, more preferably at least 80% of the protein in the water phase comes from butter milk and/or cream serum, more preferably at least 85% of the protein in the water phase comes from butter milk and/or cream serum, more preferably at least 90% of the protein in the water phase comes from butter milk and/or cream serum, more preferably at least 95% of the protein in the water phase comes from butter milk and/or cream serum, and most preferably 100% of the protein in the water phase comes from butter milk and/or cream serum. The fat phase and the aqueous phase are then combined and emulsified so as to obtain a water-in-oil emulsion. The preparation of water-in-oil emulsions from a fat phase and an aqueous phase are conventional and known to a person skilled in the art.

The present invention also relates to a method to prepare food product comprising the use of a food composition prepared according to the invention. The pourable food composition prepared according to the invention is particularly suitable as a liquid shortening, or cooking fat, for example for shallow frying of foodstuffs. Under shallow frying it is meant frying wherein a food product is fried in a thin layer of a frying product, i.e. the product is not completely immersed in the frying product. An example of shallow frying is frying of meat, fish or vegetable in a pan. However, the compositions prepared according to the invention may also be used in baking, for example, instead of butter in preparing dough or batter, in baking bread, pancakes and cakes and in preparation of pie crusts.

An important advantage of the food compositions prepared according to the invention is that these remain pourable when stored in a refrigerator and are therefore particularly suitable for use as liquid shortening. The food compositions may also be stored at ambient, or room temperatures, although refrigerator temperatures are preferred. Yet, the composition comprises considerable amounts of milk fat and therefore has the characteristic butter taste and butter flavour.

The invention will now be illustrated by the following, nonlimiting examples.

### Examples

### Example 1 Preparation of the food composition

A formulation with the ingredients listed in Table 3 was prepared. The content is given in wt. % based on total weight of the composition.

**Table 3**

| Fat phase: | | |
|---|---|---|
| | milk fat fraction, melting point 7°C | 41.00 |
| | vegetable oil | 39.90 |
| | fully hydrogenated rapeseed oil | 0.50 |
| | emulsifier | 0.50 |
| | beta carotene | 0.0020 |

| Water phase: | | |
|---|---|---|
| | fermented whey | 0.27 |
| | water | 6.52 |
| | salt | 1.5 |
| | milk serum | 9.71 |

The water phase and the fat phase are prepared separately. The fat phase is prepared by mixing all ingredients at 50°C. The ingredients of the water phase are mixed and dissolved at 50°C, followed by pasteurisation. The water phase is then added to the fat phase to form a water-in-oil emulsion. The emulsion is pumped to a Kombinator (Gerstenberg Schröder), wherein it is cooled and precrystallised, passing a pin-worker and cooled again, followed by maturing. The resulting liquid frying composition has a shear stress at a shear rate of 55/s of 86 Pa and a viscosity at shear rate 10/s of 4.7 Pa.s.

### Example 2

A similar composition to example 1 was prepared with a milk fat fraction having a melting point of 17°C. The milk fat fraction was present in an amount of 10 wt.% of the fat phase.

### Example 3

A similar composition to example 1 was prepared with a milk fat fraction having a melting point of 11°C. The milk fat fraction was present in an amount of 15wt.% of the fat phase.

### Example 4

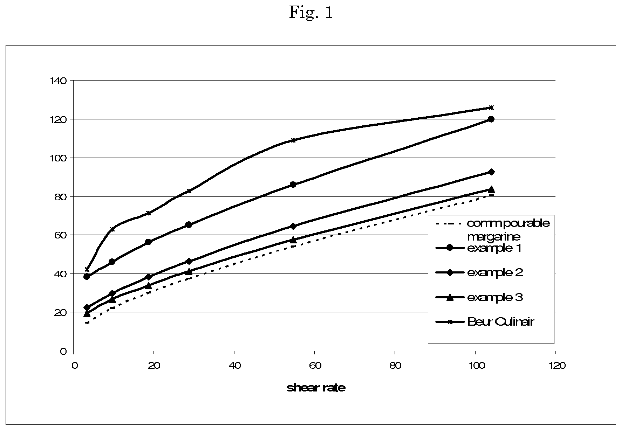

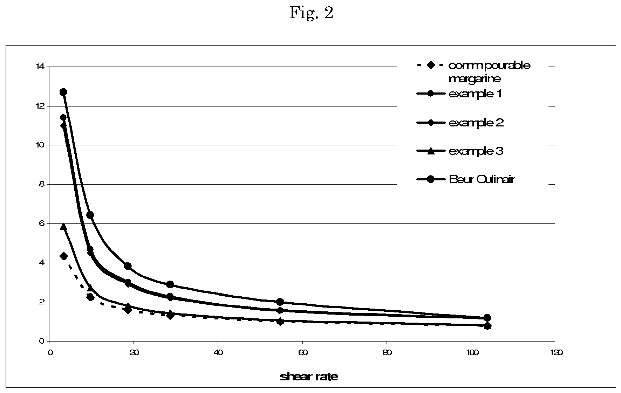

Shear stress and viscosity were measured at different shear rates and compared to a commercial pourable margarine with vegetable fats which is pourable at 4°C and with Beur Culinair, a product that is pourable at room temperature but solid at 4°C. The measurements were carried out at 4 °C. Figure 1 and 2 show the shear stress and viscosity of the products respectively.

### Example 5

Comparison of spattering behaviour of compositions with different protein sources. Table 4 shows the ingredients of 4 tested pourable compositions, with different protein sources: cream serum, buttermilk and skim milk. In addition, two different emulsifiers are tested.

**Table 4**

| Fat phase: | I | II | III | IV |
|---|---|---|---|---|
| milk fat fraction, melting point 5°C | 41.00 | 41.00 | 41.00 | 41.00 |
| vegetable oil | 39.80 | 39.80 | 39.80 | 39.80 |
| fully hydrogenated rapeseed oil | 0.90 | 0.90 | 0.90 | 0.90 |
| sunflower lecithin (mono-diglycerides) | 0.60 | 0.60 | 0.60 | |
| Native sunflower lecithin | | | | 0.60 |
| beta carotene | 0.0020 | 0.0020 | 0.002 | 0.002 |
| Water phase | | | | |
| fermented whey | 0.27 | 0.27 | 0.27 | 0.27 |
| water | 6.18 | 14.95 | 14.95 | 6.18 |
| salt | 1.5 | 1.5 | 1.5 | 1.5 |
| milk serum | 9.75 | | | 9.75 |
| Buttermilk powder | | 0.975 | | |
| Skim milk powder | | | 0.975 | |

### Frying tests

### Spattering

A stainless steel pan is used. The pan is placed on an induction plate, and a spattering scoring card is placed on the left hand site of the pan. 25 (± 0,1) gram of butter is weighed. The induction plate is turned on to obtain a temperature of 140°C. The butter is added and the pan is moved for 1 minute so that the butter spreads over the surface of the pan. After 2.5 minutes the pan is removed from the induction plate and the spattering is assessed from the spattering scoring card and compared to a set of standard pictures number 0-10 indicating the spattering value. 10 indicates no spattering and 0 indicates very bad spattering. A general indication is as follows:

| Spattering Score | Comments |
|---|---|
| 10 | Excellent |
| 8 | Good |
| 6 | Passable |
| 4 | Unsatisfactory |
| 2 | Very poor |

**Table 5: Spattering results**

| # | | Spattering behaviour (see pictures fig 4) | Spattering score |
|---|---|---|---|
| I | Cream serum | Some small spatters visible | 8 |
| II | Buttermilk powder | Some small spatters visible | 8 |
| III | Skimmed milk powder | Many spatters, large spatters | 6 |
| IV | Cream serum | Some small spatters visible | 8 |

As can be seen from table 5, the compositions with buttermilk or cream serum as protein source show good spattering with only some small spatters visible, whereas the composition with skimmed milk powder spatter much more, with many spatters and also large spatters.

## Claims

1. Method for the preparation of a pourable, fat-comprising food composition, said method comprising the steps of:
(i) preparing an aqueous phase, comprising cream serum or butter milk
(ii) preparing a fat phase, wherein the fat phase comprises at least 10 wt.% milk fat fractions having a melting point below 30°C based on the weight of the fat phase, wherein the fat phase comprises 0-90 wt.% of a vegetable oil having a melting point lower than 0°C based on the weight of the fat phase, and optionally a hard fat component in an amount of 0.1-5 wt.% based on the weight of the fat phase, and
(iii) combining the aqueous and the fat phase to obtain a water-in-oil emulsion having 30-90 wt.% of a fat phase and 10-70 wt.% of a water phase, and having a pourable consistency at refrigerator temperatures and, in particular, at 4°C.

2. The method according to claim 1, wherein the composition comprises protein in an amount from 0.05 to 2.5 wt.% on total weight of the composition.

3. The method according to any one of the foregoing claims, wherein the composition has a shear stress of less than 109 Pa at a shear rate of 50/s at refrigerator temperatures.

4. The method according to any one of the foregoing claims, wherein the fat phase comprises at least 20 wt.% milk fat fractions based on the weight of the fat phase.

5. The method according to any one of the foregoing claims, wherein the fat phase further comprises a hard fat with a melting point between 55 and 70°C, in an amount of 0.5-5 wt.% based on the weight of the fat phase.

6. The method according to any one of the foregoing claims, further comprising incorporating one or more of emulsifiers, colorants, flavours, vitamins, mono- and/or diglycerides and thickeners.

7. Method of preparing a food product, wherein the method according to any one of the foregoing claims is carried out, and the pourable food composition obtained is used to prepare a food product.

8. Method of shallow frying or baking of foodstuffs, wherein the method according to any one of claims 1-6 is carried out, and the pourable food composition obtained is used for shallow frying or baking of foodstuffs.

## Patentansprüche

1. Verfahren zur Herstellung von einer fließfähigen, Fett umfassenden Lebensmittelzusammensetzung, das Verfahren umfassend die Schritte von:
(i) Herstellen einer wässrigen Phase, umfassend Rahmserum oder Buttermilch
(ii) Herstellen einer Fettphase, wobei die Fettphase mindestens 10 Gew.-% Milchfettfraktionen mit einem Schmelzpunkt unter 30°C, basierend auf dem Gewicht der Fettphase, umfasst, wobei die Fettphase 0-90 Gew.-% eines Pflanzenöls mit einem Schmelzpunkt niedriger als 0°C, basierend auf dem Gewicht der Fettphase, und optional eine Hartfettkomponente in einer Menge von 0,1-5 Gew.-%, basierend auf dem Gewicht der Fettphase, umfasst, und
(iii) Kombinieren der wässrigen und der Fettphase, um eine Wasser-in-Öl-Emulsion mit 30-90 Gew.-% einer Fettphase und 10-70 Gew.-% einer Wasserphase und mit einer fließfähigen Konsistenz bei Kühlschranktemperaturen und insbesondere bei 4°C zu erhalten.

2. Verfahren nach Anspruch 1, wobei die Zusammensetzung Protein in einer Menge von 0,05 bis 2,5 Gew.-% auf Gesamtgewicht der Zusammensetzung umfasst.

3. Verfahren nach einem der vorhergehenden Ansprüche, wobei die Zusammensetzung eine Scherspannung von weniger als 109 Pa bei einer Scherrate von 50/s bei Kühlschranktemperaturen hat.

4. Verfahren nach einem der vorhergehenden Ansprüche, wobei die Fettphase mindestens 20 Gew.-% Milchfettfraktionen, basierend auf dem Gewicht der Fettphase, umfasst.

5. Verfahren nach einem der vorhergehenden Ansprüche, wobei die Fettphase ferner ein Hartfett mit einem Schmelzpunkt zwischen 55 und 70°C in einer Menge von 0,5-5 Gew.-%, basierend auf dem Gewicht der Fettphase, umfasst.

6. Verfahren nach einem der vorhergehenden Ansprüche, ferner umfassend Inkorporieren eines oder mehrerer von Emulgatoren, Farbstoffen, Aromastoffen, Vitaminen, Mono- und/oder Diglyceriden und Verdickungsmitteln.

7. Verfahren zur Herstellung eines Lebensmittelprodukts, wobei das Verfahren nach einem der vorhergehenden Ansprüche ausgeführt wird und die erhaltene fließfähige Lebensmittelzusammensetzung zur Herstellung eines Lebensmittelprodukts verwendet wird.

8. Verfahren zum oberflächlichen Braten oder Backen von Lebensmitteln, wobei das Verfahren nach einem der Ansprüche 1-6 ausgeführt wird und die erhaltene fließfähige Lebensmittelzusammensetzung zum oberflächlichen Braten oder Backen von Lebensmitteln verwendet wird.

## Revendications

1. Procédé de préparation d'une composition alimentaire fluide comprenant une matière grasse, ledit procédé comprenant les étapes consistant à :
(i) préparer une phase aqueuse comprenant du sérum de la crème ou du babeurre
(ii) préparer une phase huileuse, la phase huileuse comprenant au moins 10 % en poids de fractions de matières grasses du lait ayant un point de fusion inférieur à 30 °C par rapport au poids de la phase huileuse, la phase huileuse comprenant de 0 à 90 % en poids d'une huile végétale ayant un point de fusion inférieur à 0 °C par rapport au poids de la phase huileuse, et facultativement un composant gras dur en une quantité de 0,1 à 5 % en poids par rapport au poids de la phase huileuse, et
(iii) combiner la phase aqueuse et la phase huileuse pour obtenir une émulsion eau-dans-l'huile ayant de 30 à 90 % en poids de phase huileuse et de 10 à 70 % en poids de phase aqueuse, et ayant une consistance fluide aux températures du réfrigérateur, et en particulier à 4 °C.

2. Procédé selon la revendication 1, dans lequel la composition comprend une protéine en une quantité de 0,05 à 2,5 % en poids par rapport au poids total de la composition.

3. Procédé selon l'une quelconque des revendications précédentes, dans lequel la composition a une contrainte de cisaillement inférieure à 109 Pa à une vitesse de cisaillement de 50/s aux températures du réfrigérateur.

4. Procédé selon l'une quelconque des revendications précédentes, dans lequel la phase huileuse comprend au moins 20 % en poids de fractions de matières grasses du lait par rapport au poids de la phase huileuse.

5. Procédé selon l'une quelconque des revendications précédentes, dans lequel la phase huileuse comprend en outre une matière grasse dure ayant un point de fusion compris entre 55 et 70 °C, en une quantité de 0,5 à 5 % en poids par rapport au poids de la phase huileuse.

6. Procédé selon l'une quelconque des revendications précédentes, comprenant en outre l'incorporation d'un ou plusieurs éléments parmi des émulsifiants, des colorants, des arômes, des vitamines, des mono- et/ou diglycérides et des épaississants.

7. Procédé de préparation d'un produit alimentaire, le procédé selon l'une quelconque des revendications précédentes étant réalisé et la composition alimentaire fluide obtenue étant utilisée pour préparer un produit alimentaire.

8. Procédé de cuisson sautée ou de cuisson au four de denrées alimentaires, le procédé selon l'une quelconque des revendications 1 à 6 étant réalisé et la composition alimentaire fluide obtenue étant utilisée pour la cuisson à la poêle ou la cuisson au four de denrées alimentaires.
